# DEMANDE DE BREVET EUROPEEN

(11) **EP 3 454 316 A1**
(43) Date de publication de la demande: **13.03.2019**
(21) Numéro de dépôt: 18193055.3
(22) Date de dépôt: 06.09.2018
(51) Int. Cl.: G08G 5/00, B64C 39/02, B64D 1/02, G08G 5/04

(54) **ESSAIM CONSTITUE D'UNE PLURALITE DE DRONES VOLANTS LEGERS**

(30) Priorité: 08.09.2017 FR 1700905
(71) Demandeur: Thales, 92400 Courbevoie (FR)
(72) Inventeur: GUERRINI, Gilles, 33608 PESSAC CEDEX (FR); GARREC, Patrick, 33608 PESSAC CEDEX (FR); FALOMIR, Ema, 33701 MERIGNAC CEDEX (FR)
(74) Mandataire: Lavoix

(57) **Abrégé**

Cet essaim (101) est constitué d'une pluralité de drones (111-115), les drones étant des drones volants, les drones formant entre eux un réseau de communication. Il se caractérise en ce que l'essaim met en oeuvre, en autonomie, une fonctionnalité d'évitement d'obstacles (20) fondée sur une observation collaborative de l'environnement de l'essaim par chacun des drones et le partage des informations de détection d'obstacle entre les drones.

## Description

L'invention a pour domaine celui des essaims de drones volants. Elle est plus particulièrement relative aux fonctionnalités de détection et d'évitement d'obstacles pour de tels essaims.

L'un des intérêts principaux d'un essaim de drones réside en ce qu'il peut être considéré, par l'opérateur qui le contrôle à distance, comme une entité unique.

Pour que cela soit possible, certaines fonctionnalités doivent être gérées par l'essaim lui-même, sans intervention de l'opérateur.

Parmi ces fonctionnalités gérées en autonomie par l'essaim, on trouve en particulier la fonctionnalité de détermination des trajectoires individuelles de chacun des drones.

Cette fonctionnalité doit permettre de réaliser la mission affectée à l'essaim, par exemple se diriger vers un point de destination prédéfini, en tenant compte du relief du terrain survolé ; de la météo ; de la présence d'obstacles fixes ou mobiles pour les éviter ; de la présence des autres drones de l'essaim pour éviter les collisions internes à l'essaim ; et éventuellement du dysfonctionnement d'un ou de plusieurs drones de l'essaim.

La fonctionnalité de détermination des trajectoires individuelles est notamment fondée sur une fonctionnalité de détection d'obstacle afin de les éviter.

Actuellement, la détection d'obstacle est réalisée par un drone principal, dit drone « détecteur », qui embarque un système de capteurs permettant une observation complète de l'environnement de l'essaim. Par complète, on entend la capacité du système de capteurs d'observer au moins une zone de +/-110° en azimut et +/- 10° en élévation, sur une profondeur de plusieurs centaines de mètres. Ceci correspond à ce qui est demandé au pilote d'un avion à voilure fixe en termes de champ de vision.

Par exemple, le système de capteurs comporte un radar pour la détection longue distance des obstacles et une caméra optique pour l'identification des obstacles détectés par le radar.

Cette solution efficace implique cependant d'embarquer sur la plateforme que constitue le drone un système de capteurs élaboré et par conséquent coûteux.

Un tel système de capteurs ayant de plus un poids important, il est nécessaire de dimensionner le drone « détecteur » pour qu'il puisse embarquer une telle charge. Il ne s'agit donc pas d'un mini-drone, ou drone léger, c'est-à-dire d'un drone de petite taille du type quadrimoteur, tels que ceux que l'on peut trouver dans le commerce pour le grand public.

Il est en tout cas différent des autres drones de l'essaim.

Si ce drone « détecteur » est détruit ou tombe en panne au cours de la mission, l'essaim n'est plus en mesure de détecter et donc d'éviter les obstacles. La réalisation de la mission est alors totalement compromise.

Par ailleurs, il n'est pas envisageable de munir chacun des drones de l'essaim d'un tel système de capteurs, car il faudrait dimensionner chacun des drones pour qu'il puisse embarquer une telle charge. En conséquence, cette solution n'est envisageable que pour des drones puissants, qui ne seraient donc pas des drones légers. Cette solution aurait un coût important en termes de plateforme et de système de capteurs.

D'autres solutions sont envisagées, telles que la détection des obstacles par le sol, puis la communication des informations de détection de la station de détection au sol vers les drones.

Cependant, cette solution implique des communications entre le sol et l'essaim au cours de la réalisation de la mission. De telles communications manquent de discrétion.

De plus l'observation de l'environnement de l'essaim à partir du sol n'est pas bonne pour les angles rasants, de sorte que la détection d'obstacle au sol (pont, pylônes, etc.) est de mauvaise qualité.

Enfin, si la détection d'obstacle est réalisée de cette manière, on ne se trouve plus dans le cadre d'une fonction gérée en autonomie par l'essaim.

Une autre solution consiste à réaliser une carte de la région où se déroule la mission, mentionnant notamment les obstacles à éviter. Cette carte est stockée dans la mémoire des drones et est prise en compte lors de la réalisation de la mission. Là encore la détection n'est pas réalisée en autonomie par l'essaim.

Mais surtout, une telle solution ne permet pas la détection d'obstacle mobiles dans la région cartographiée.

Enfin l'essaim ne peut s'aventurer en dehors de la région correspondant à la carte stockée.

L'invention a donc pour but de proposer une alternative aux solutions précédentes, en particulier une solution qui puisse être mise en oeuvre en autonomie par l'essaim.

Pour cela l'invention a pour objet un essaim constitué d'une pluralité de drones, les drones étant des drones volants, les drones formant entre eux un réseau de communication, caractérisé en ce que l'essaim met en oeuvre, en autonomie, une fonctionnalité d'évitement d'obstacles fondée sur une observation collaborative de l'environnement de l'essaim par chacun des drones et le partage des informations de détection d'obstacle entre les drones.

Suivant des modes particuliers de réalisation, l'essaim comporte une ou plusieurs des caractéristiques suivantes, prises isolément ou suivant toutes les combinaisons techniquement possibles :
- chaque drone embarque : un système de capteurs permettant l'observation de l'environnement de l'essaim à l'intérieur d'une enveloppe d'observation partielle et la génération d'informations de détection d'obstacle en cas de présence d'un obstacle à l'intérieur de ladite enveloppe d'observation partielle ; un moyen de radiocommunication pour l'établissement d'au moins un lien de communication avec un autres drone de l'essaim pour l'échange des informations de détection d'obstacle ; et une unité de calcul propre à calculer une trajectoire individuelle dudit drone à partir des informations de détection d'obstacle générées par ledit drone ou reçues d'un autre drone de l'essaim.
- l'unité de calcul de chaque drone est propre à déterminer une position relative et/ou une vitesse relative d'au moins un drone proche dudit drone, l'unité de calcul dudit drone calculant la trajectoire individuelle dudit drone en tenant compte, en outre, de ladite position relative et/ou de ladite vitesse relative.
- l'unité de calcul de chaque drone calcule la trajectoire individuelle dudit drone de manière à ce que l'essaim adopte une configuration optimisée.
- la configuration est optimisée en maximisant une zone de l'environnement observée par l'essaim, la zone observée correspondant à la réunion des enveloppes d'observation partielles de chaque drone de l'essaim.
- l'essaim se déplaçant selon une direction principale, les drones sont orientés pour que la zone observée se situe préférentiellement en avant de l'essaim de drones.
- la configuration est optimisée de sorte qu'une topologie du réseau de communication que forment entre eux les drones de l'essaim soit connexe, de préférence bi-connexe.
- l'essaim est propre à s'écarter de sa configuration optimisée par déformation pour éviter un obstacle, puis à reprendre la configuration optimisée initiale après avoir dépassé l'obstacle.
- la configuration est optimisée de sorte qu'une distance entre deux drones proches soit contrainte autour d'une distance de référence.
- les drones sont identiques entre eux, les systèmes de capteurs embarqués par chacun des drones étant identiques.
- les drones sont différents, les systèmes de capteurs embarqués par chacun des drones étant identiques ou différents, l'essaim étant hétérogène.
- chaque drone est un drone léger, présentant une envergure totale inférieure à un mètre.
- l'unité de calcul d'un drone mémorise une matrice maillant l'environnement de l'essaim, la matrice étant subdivisée en cellules, chaque cellule dans laquelle un obstacle a été détecté étant associée à un drapeau, une mise à jour de la matrice étant réalisée à partir des informations de détection d'obstacle générées par ledit drone ou reçues d'un autre drone de l'essaim.
- les dimensions des cellules de la matrice dépendent des enveloppes d'observation partielles des systèmes de capteurs des drones de l'essaim.

L'invention a également pour objet un procédé de détection et d'évitement d'un obstacle mis en oeuvre dans un essaim conforme à l'essaim précédent, caractérisé en ce qu'il comporte les étapes consistant à : adoption par l'essaim d'une configuration optimisée ; observation d'une zone de l'environnement correspondant à la réunion des enveloppes d'observation partielles de chaque drone de l'essaim ; partage des informations de détection d'obstacle générées par un drone avec les autres drones de l'essaim en utilisant le réseau de communication établis entre les drones de l'essaim ; et calcul par chaque drone de sa trajectoire individuelle en tenant compte des informations de détection d'obstacle qu'il a générées et/ou qu'il a reçues d'autres drones.

Suivant des modes particuliers de réalisation, le procédé comporte une ou plusieurs des caractéristiques suivantes, prises isolément ou suivant toutes les combinaisons techniquement possibles :
L'invention et ses avantages seront mieux compris à la lecture de la description détaillée qui va suivre d'un mode de réalisation particulier, donnée uniquement à titre d'exemple non limitatif, cette description étant faite en se référant aux dessins annexés sur lesquels :
   - la figure 1 est une représentation schématique d'un essaim de sept drones adoptant une configuration optimale pour la détection d'obstacle et leur évitement ;
   - les figures 2 à 5 représentent un essaim de cinq drones dans différentes configurations successives au cours de l'évitement d'un obstacle détecté ; et,
   - la figure 6 est une représentation schématique d'une cartographie de l'environnement avantageusement utilisée par chacun des drones de l'essaim.

### PRINCIPE GENERAL

Selon l'invention, chaque drone de l'essaim embarque un système de capteurs de poids réduit et peu couteux, mais qui ne permet l'observation que d'une fraction limitée de l'environnement de l'essaim. La géométrie de cette enveloppe d'observation partielle dépend de la couverture angulaire du ou des capteurs embarqués choisis.

Alors que chaque drone ne peut assurer une observation de l'environnement qu'à l'intérieur d'une enveloppe d'observation réduite, les drones se partagent les informations de détection d'obstacle qu'ils produisent en se les échangeant sur le réseau de communication qu'ils établissent entre eux.

Chaque drone peut alors élaborer une représentation de l'environnement indiquant les obstacles à éviter. La fonctionnalité de détection d'obstacle est donc distribuée entre les différents drones.

Sur la base de cette représentation, chaque drone détermine en temps réel sa trajectoire individuelle de manière à éviter les collisions avec les obstacles détectés.

Le calcul de la trajectoire individuelle prend en compte d'autres informations, telles que la position relative et/ou la vitesse relative des autres drones de l'essaim de manière à éviter les collisions avec les autres drones de l'essaim.

L'essaim adopte une configuration permettant d'optimiser la zone couverte par les enveloppes d'observation individuelles, tout en optimisant le réseau de communication entre drone (chaque drone représentant un noeud du réseau et chaque liaison de communication entre deux drones constituant un lien entre deux noeuds du réseau).

Notamment, la zone d'observation est optimisée en orientant convenablement la direction d'observation des systèmes de capteurs des drones par rapport à une direction de déplacement de l'ensemble de l'essaim.

Le réseau est optimisé en sécurisant le nombre de liens de communication établis entre les drones de l'essaim.

Alors que l'essaim a adopté une configuration particulière, l'évitement d'un obstacle se traduit par une déformation de l'essaim, qui revient dans sa configuration initiale une fois l'obstacle dépassé.

Cette solution permet de miniaturiser le système de capteurs embarqué par chaque drone, d'en réduire le poids et par conséquent de permettre l'utilisation de plateformes de taille réduite.

Cette solution permet également une plus grande réactivité de l'essaim puisque les drones de petite taille présentent une inertie extrêmement réduite et par conséquent une réactivité inférieure à la seconde.

Dans ce schéma, la perte d'un drone de l'essaim a pour conséquence la reconfiguration en temps réel de l'essaim constitué des drones restants. La fonction de détection et d'évitement d'obstacles peut encore être réalisée, et la mission que l'essaim doit remplir peut encore être réalisée.

### STRUCTURE

Un essaim de drones est constitué d'une pluralité de N drones.

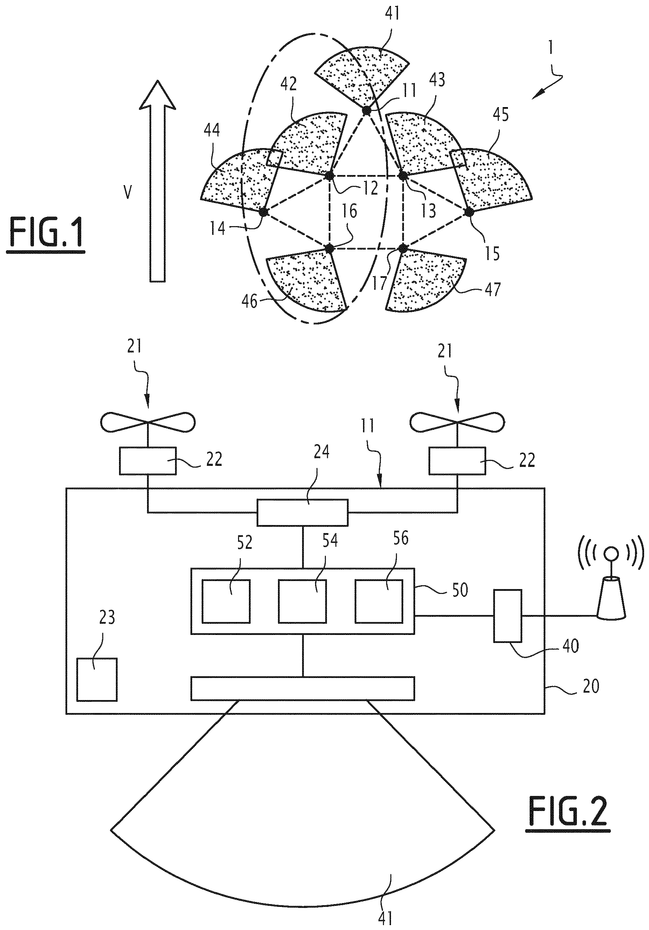

Sur la figure 1, l'essaim 1 est constitué de sept drones 11 à 17, tandis que sur les figures 2 à 6, l'essaim 101 est constitué de cinq drones 111 à 115.

Comme illustré par la figure 2, un drone, tel que le drone 11, est une plateforme volante, par exemple un multirotor, tel que ceux que l'on peut trouver dans le commerce pour le grand public,

Il est de petite taille. Par exemple, il présente une envergure totale inférieure à un mètre.

Il comporte par exemple quatre rotors 21 mis en rotation par des moteurs 22, alimentés par des moyens d'alimentation 23 adaptés et commandés par des moyens d'actionnement 24 adaptés.

Un tel drone peut par exemple voler à une vitesse maximale de 50 Km/h.

Il présente une inertie réduite, lui conférant une très grande maniabilité.

Un drone 11 comporte un système de capteurs 30. Il s'agit d'un ou plusieurs capteurs permettant une observation de l'environnement sur une enveloppe d'observation partielle. Les enveloppes d'observation des drones 11 à 17 sont référencées 41 à 47.

L'enveloppe d'observation a par exemple une ouverture de 90° en azimut et +/-10° en élévation et une portée limitée, mais dimensionnée en fonction notamment de la vitesse maximum du drone utilisé.

La portée est par exemple dimensionnée de la manière suivante. Les drones ayant une vitesse maximale de l'ordre de 50 Km/h, la distance de détection doit permettre d'éviter une collision frontale entre deux essaims se déplaçant l'un vers l'autre, chacun à 14 m/s, soit à 28 m/s en rapprochement. L'inertie étant négligeable, une détection à 50 mètres de distance est suffisante à condition que les temps de communication entre les drones d'un essaim soient minimes. Il faudra donc adapter la topologie du réseau de communication que constitue l'essaim en fonction de cette contrainte.

Un système de capteurs 30 constitué d'une caméra optique à bas coût répond à ce dimensionnement de la portée de détection.

De préférence, la caméra fonctionne également dans le domaine infrarouge, de manière à pouvoir confirmer les détections dans le domaine optique à partir d'une signature thermique de l'obstacle détecté.

Avantageusement, le système de capteurs 30 intègre un capteur sonore (ou sonar) permettant de redonder à moindre coût et à moindre encombrement la caméra.

En variante, d'autres types de capteurs pourraient être utilisés tels qu'un capteur radar, un capteur lidar, ou toute combinaison des types de capteurs venant d'être énoncés.

Dans le mode de réalisation envisagé, les différents drones 11 à 17 de l'essaim 1 sont identiques, lorsqu'on les considère indépendamment du système de capteurs qu'ils embarquent. Si les systèmes de capteurs des drones sont identiques entre eux, les drones sont dits identiques. Si les systèmes de capteurs des drones sont différents, les drones sont dits similaires.

En variante, les différents drones de l'essaim sont différents, lorsqu'on les considère indépendamment du système de capteurs qu'ils embarquent. On parlera alors de drones différents qu'ils embarquent des systèmes de capteurs identiques ou différents. L'essaim est alors dit hétérogène.

Le drone 11 comporte un module de radiocommunication 40 permettant l'établissement de liens de communication avec d'autres drones de l'essaim. Les drones avec lesquels un drone a établi, à l'instant courant, un lien de communication sont dits drones « voisins » du drone considéré. Sur la figure 1, les liens établis sont représentés par des traits pointillés. Par exemple le drone 12 a pour drones voisins, les drones 11, 13, 14 et 16.

Avantageusement, la communication entre deux drones se fait en bande large ou ultra large (« Ultra Wide Band » en anglais), qui présente l'avantage de permettre une détermination aisée de la distance entre les deux drones en communication, comme cela est connu de l'homme du métier.

Un drone peut établir par exemple un maximum de trois liens. En effet, au-delà de ce nombre maximal de liens, la bande passante risque d'être insuffisante.

Le drone 11 embarque également une unité de calcul 50 comportant un processeur et une mémoire. Le processeur est propre à exécuter les instructions de programmes d'ordinateur stockées dans la mémoire.

En particulier, l'unité de calcul 50 exécute un programme 52 de détection d'obstacle.

Ce programme permet, lorsqu'il est exécuté sur un drone, par exemple le drone 11, l'acquisition et le traitement des signaux délivrés par le ou les capteurs du système de capteurs 30 du drone 11, pour générer des informations de détection d'obstacle.

Il permet également l'échange des informations de détection avec les autres drones. Le drone 11 émet ainsi les informations de détection qu'il a produite et reçoit de ses voisins des informations de détection produites par d'autres drones de l'essaim.

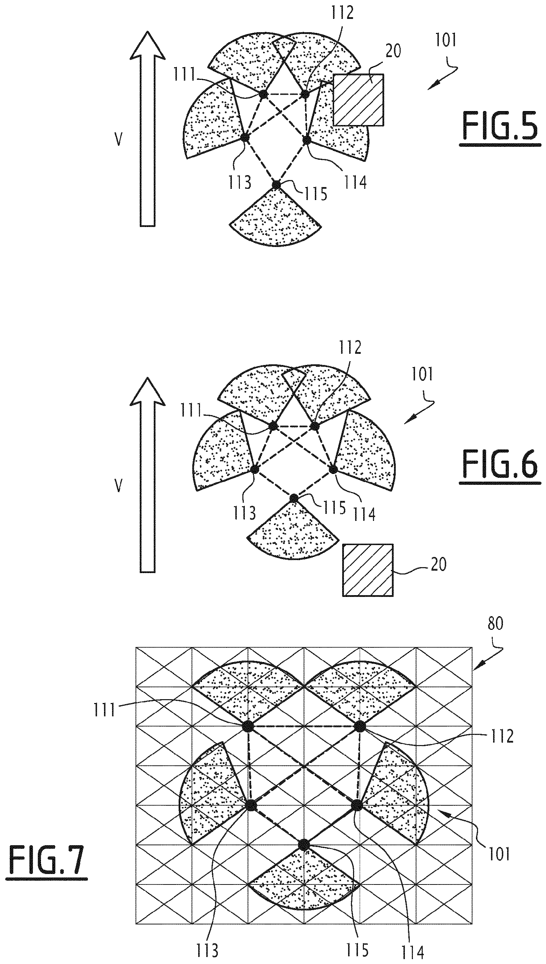

Il permet enfin la mise à jour d'une matrice stockée dans la mémoire du drone 11, telle que la matrice 80 représentée sur la figure 7.

Cette matrice est une représentation de l'environnement de l'essaim.

La matrice est constituée d'une pluralité de cellules pavant l'environnement de l'essaim.

La figure 7 représente de manière schématique une telle matrice subdivision de l'espace entourant l'essaim en une pluralité de cellules.

Deux solutions sont envisageables : la matrice est relative à l'essaim et elle est par exemple déterminée dans un référentiel associé à un drone particulier, dit principal, ou au barycentre des drones de l'essaim ; ou la matrice est prédéfinie par rapport au terrain, c'est-à-dire fixe par rapport au sol, ce qui présente un intérêt lorsque l'on utilise un modèle numérique de terrain.

Les cellules de la matrice sont avantageusement adaptées aux dimensions des enveloppes d'observation des systèmes de capteurs des drones.

Un drapeau est associé à une cellule lorsqu'un obstacle est détecté dans ladite cellule. Avantageusement, se drapeau indique l'instant de détection de l'obstacle et n'est conservé que pendant une durée de rémanence adaptée.

L'unité de calcul 50 exécute également un programme 54 de détermination de la configuration instantanée de l'essaim.

Il est préférable que chaque drone ait une connaissance de la configuration générale de l'essaim à chaque instant. Cependant, pour ce faire, la quantité d'informations à échanger sur le réseau pour que chacun des drones puisse maintenir cette connaissance est trop importante, pas toujours utile et risque de pénaliser l'échange des informations de détection d'obstacle considérée comme prioritaires.

Il est donc envisagé de limiter la connaissance que possède un drone de la configuration de l'essaim à la position des drones géographiquement proches, de manière à limiter l'information à transmettre sur le réseau de communication. Par drones proches, on entend l'ensemble des drones se situant à l'intérieur d'un volume centré sur le drone considéré et ayant une extension selon la direction de la vitesse V de déplacement de l'essaim qui dépend de l'amplitude de cette vitesse. Par exemple, si à l'arrêt, ce volume est une sphère de rayon R, au cours du déplacement de l'essaim, ce volume se déforme en un ovoïde de petit axe R dans la direction perpendiculaire à la vitesse V et de grand axe R(1+V/V0), où V0 est une vitesse de référence, dans la direction de la vitesse V. Un tel volume est représenté par un trait mixte sur la figure 1 pour le drone 12. Les drones géométriquement proches du drone 12 sont les drones 11, 14 et 16.

La détermination de la position relative entre deux drones à la fois proches et voisins est réalisée à partir par exemple de la mesure de la distance entre deux drones ayant établi un lien de radiocommunication UWB, comme indiqué ci-dessus, éventuellement couplée avec une mesure d'angle entre les deux drones au moyen d'un système de goniomètre embarqué.

La détermination de la position relative entre deux drones proches mais qui ne serait pas voisins passe par la détermination de positions relatives par rapport à un drone intermédiaire et l'échange de ces mesures sur le réseau.

L'unité de calcul 50 exécute un programme 56 de calcul de la trajectoire individuelle du drone 11. La trajectoire calculée est utilisée par les moyens 24 pour l'actionnement adapté des moteurs et le déplacement du drone, en particulier de manière à éviter un obstacle ou une collision avec un autre drone.

Sur un lien de communication, un drone est finalement propre à échanger des messages avec ses voisins comportant les informations suivantes :
- un identifiant du drone émetteur du message ;
- la position instantanée et la vitesse instantanée du drone émetteur ;
- les identifiants de drones voisins du drone émetteur ;
- une information de position relative entre le drone émetteur et des drones proches, telle que par exemple la distance entre ces drones et l'angle entre ces drones ; et,
- une information de détection d'obstacle générée par le drone émetteur ou reçue par le drone émetteur depuis un drone voisin.

Cette information de détection d'obstacle prend par exemple la forme d'une liste indiquant les coordonnées des cellules de la matrice dans lesquelles un obstacle a été détecté et le drapeau associé.

Un drone peut recevoir la même information de détection de la part de plusieurs de ses voisins. Ces redondances permet avantageusement la mise en oeuvre un contrôle d'intégrité.

### FONCTIONNEMENT

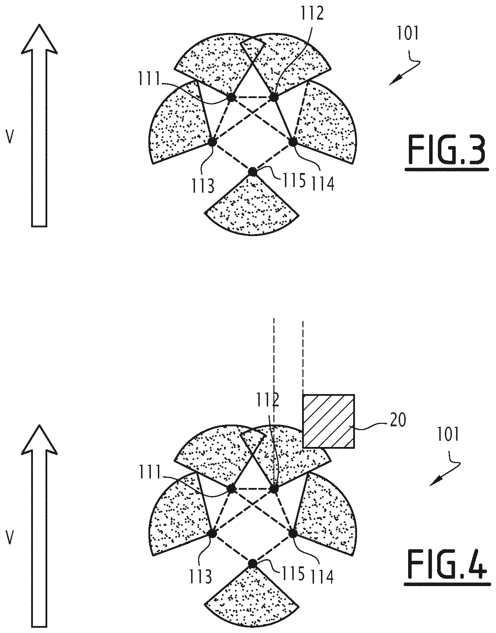

Le fonctionnement de l'essaim va maintenant être décrit en référence aux figures 3 à 6.

Chaque drone 111 à 115 de l'essaim 101 se déplace selon une direction principale (correspondant à la direction de la vitesse V de l'essaim), vers un objectif commun, défini dans la mission affectée à l'essaim et mémorisée par chacun des drones. Cet objectif est constitué par exemple par un point géographique de destination.

Pour son déplacement, l'essaim 101 adopte dynamiquement une configuration qui résulte de l'optimisation d'une fonction de coût permettant la prise en compte de différentes contraintes, notamment une première contrainte d'observation optimisée de l'environnement et une seconde contrainte d'optimisation de la topologie du réseau de communication au sein de l'essaim.

La première contrainte force l'essaim à adopter une configuration permettant une observation de l'environnement avec une couverture optimale. En particulier, les différentes enveloppes d'observation partielles des systèmes de capteurs des drones sont orientées les unes en fonction des autres et de la direction principale de déplacement de l'essaim pour maximiser la probabilité de détection des obstacles mobiles ou fixes avec lesquels l'un ou l'autre des drones de l'essaim risque de rentrer en collision.

Chaque drone est ainsi affecté dynamiquement à une tâche d'observation consistant à observer un secteur de l'environnement, notamment certaines cellules de la matrice lorsqu'une telle cartographie est utilisée. La tâche d'observation dépend de la position du drone considéré dans la configuration adoptée.

Sont surveillés en priorité les secteurs de l'environnement situés en avant de l'essaim, c'est-à-dire vers lesquels se déplace l'essaim.

Ainsi, les enveloppes de détection des drones 111 et 112 disposés sur le front avant de la configuration adoptée par l'essaim 101 sont orientées vers l'avant et se jouxtent ou se superposent légèrement au niveau de leurs bordures de manière à surveiller de manière spatialement continue le secteur situé en avant de l'essaim.

Avantageusement, les drones 113 et 114 situés sur un front latéral de la configuration se déplacent de manière à ce que leur direction d'observation et leur direction de déplacement face un angle adapté pour l'observation d'un secteur situé sur le côté de l'essaim.

Avantageusement, le drone 115 situé sur un front arrière de la configuration se déplace de manière à ce que sa direction d'observation et sa direction de déplacement fasse un angle adapté pour l'observation d'un secteur situé à l'arrière de l'essaim, de manière à être capable de détecter des obstacles mobiles s'approchant de l'essaim par l'arrière.

La seconde contrainte force l'essaim à adopter une configuration optimisant la topologie du réseau. Avantageusement, la topologie du réseau est connexe, c'est-à-dire que chaque drone peut échanger des messages avec tous les autres drones de l'essaim soit directement (c'est-à-dire avec un drone voisin, comme le drone 112 avec les drones 111, 113 et 114) soit indirectement par l'intermédiaire de drone(s) jouant le rôle de noeuds relais (comme le drone 112 avec le drone 115 via le drone 114).

De manière avantageuse, la topologie du réseau est bi-connectée, de sorte que si n'importe quel drone est supprimé, l'essaim reste connexe.

La seconde contrainte sur la topologie du réseau sous-entend également qu'une distance entre deux drones est maintenue autour d'une distance de référence D0 au cours du déplacement de l'essaim et l'évitement d'obstacles.

Cette distance de référence D0 est par exemple considérée comme étant le minimum entre la portée maximale des moyens de communication entre deux drones (par exemple 300 mètres dans le cas d'un système à bande ultra large UWB) et deux fois la portée du système de capteurs. De cette manière, lors de la détection d'un obstacle par un drone, ce dernier est en mesure de transmettre un message adapté aux autres drones de l'essaim, et les drones ont le temps de modifier leurs trajectoires pour éviter l'obstacle détecté ainsi que toute collision interne à l'essaim.

Par ailleurs cette distance de référence D0 permet d'anticiper une perte du lien de communication entre deux drones, lorsque la distance entre deux drones en communication augmente au-delà de la valeur D0.

Un exemple de configuration optimisée est représenté sur la figure 3 avec un essaim 101 constitué de cinq drones adoptant une configuration en pentagone sensiblement régulier.

Au cours du déplacement de l'essaim 101, chaque drone réalise l'acquisition des signaux délivrés par son système de capteurs et les traite de manière à détecter la présence d'un obstacle dans son enveloppe d'observation et à déterminer la position de l'obstacle.

La position d'un obstacle est par exemple donnée par les coordonnées de la cellule de la matrice à l'intérieur de laquelle a été détecté cet obstacle.

Dès qu'un drone détecte un obstacle, il partage cette information de détection avec ses voisins, par la transmission d'un message adapté.

Lors de la réception d'un message comportant une information de détection d'obstacle généré par un voisin, un drone récepteur émet vers ses voisins un message reprenant cette information de détection. Ainsi, l'information de détection initiale est partagée entre tous les drones de l'essaim.

Dès qu'un drone reçoit un message comportant une information de détection d'obstacle, il met à jour la matrice qu'il mémorise. Les informations de détection sont datées et ont une date de péremption en fonction du taux de renouvellement, du temps, et de la vitesse de l'essaim.

A chaque instant, un drone calcule sa trajectoire. Par exemple, ce calcul consiste à déterminer la direction de la vitesse instantanée et l'amplitude de la vitesse instantanée du drone.

Ce calcul prend en compte :
- la distance entre le drone considéré et ses drones voisins ;
- la vitesse relative entre le drone considéré et ses drones proches ;
- la direction relative entre le drone considéré et ses drones proches ;
- la présence ou l'absence d'obstacles dans les cellules de la matrice vers lesquelles il se déplace ; et,
- la présence ou l'absence d'obstacles à proximité de ses drones proches.

En prenant en compte ces différentes variables, le drone considéré maintient une distance entre lui et ses voisins, qui varie autour de la distance de référence D0 de manière à maintenir la liaison de communication.

Ainsi, à la figure 3, l'essaim 101 se déplace selon une direction principale en adoptant une formation en pentagone régulier, chaque drone constituant un sommet de ce pentagone.

Chaque drone se déplace sensiblement parallèlement à la direction principale.

Les drones sur le front avant surveillent l'environnement à l'avant de l'essaim. Les drones latéraux surveillent l'environnement sur le côté de l'essaim. Le drone arrière surveille l'environnement vers l'arrière de l'essaim.

A la figure 3, un obstacle 20 est détecté par le drone avant droit 112.

Le drone 112 transmet l'information de détection d'obstacle à ses voisins 111, 113 et 114.

Ceux-ci répercutent à leur tour cette information de détection d'obstacle vers le drone 115.

Chaque drone met à jour immédiatement sa matrice de représentation de l'environnement.

Parallèlement, chaque drone détermine la position et la vitesse relatives des drones proches. Par exemple le drone 114 calcule la position et la vitesse relatives des drones 112 et 115, ou encore le drone 115 calcule la position et la vitesse relatives des drones 112 et 114

Chaque drone calcule sa trajectoire individuelle en prenant en compte les informations de détection d'obstacle, en particulier les informations portées par la matrice stockée dans la mémoire du calculateur 50 lorsqu'une telle matrice est utilisée, et la position et/ou la vitesse des drones proches.

En particulier, le drone 114, informé de la présence de l'obstacle 20 détecté par le drone 112, modifie sa trajectoire individuelle de manière à contourner cet obstacle. Il se déplace vers la gauche sur la figure 5 et se rapproche ainsi du barycentre de l'essaim.

Le drone 115 constatant le rapprochement du drone 114 ralentit de manière à se déporter plus vers l'arrière de l'essaim sur la figure 5.

La configuration initiale en pentagone est déformée dynamiquement de manière à permettre à l'essaim de contourner l'obstacle 20.

Enfin, à la figure 5, l'essaim 101 ayant dépassé l'obstacle 20, reprend sa configuration initiale en pentagone régulier. La matrice mise de chaque drone est mise à jour en réinitialisant la ou les cellules où la présence de l'obstacle 20 avait été signalée.

### VARIANTES DE REALISATION

De nombreuses variantes sont envisageables. Par exemple, pour le cas d'un essaim comprenant un grand nombre de drones, un processus de priorité est avantageusement mis en oeuvre dans l'envoi des messages entre drones. Un drone analysant l'environnement dans la direction où se déplace l'essaim peut par exemple envoyer des informations de détection d'obstacle N fois plus souvent qu'un drone analysant une autre zone.

La configuration adoptée par l'essaim peut également évoluer en fonction de la vitesse V de déplacement de l'essaim. Par exemple, lorsqu'elle est élevée, il sera nécessaire de connaître avec précision l'environnement vers lequel l'essaim se déplace. De même, en cas d'attaque, l'essaim s'immobilise et les drones sont orientés de manière à observer l'environnement dans toutes les directions pour pouvoir détecter la menace.

L'essaim venant d'être présenté est discret au sens où il ne nécessite aucune communication sol-essaim pour la réalisation de la fonctionnalité de détection et d'évitement. Il est discret car le nombre de liens de communications est optimisé. Il gère en autonomie la fonctionnalité de détection et d'évitement des obstacles. Il est constitué de drones légers embarquant des systèmes de capteurs à faible coût.

## Revendications

1. Essaim (1) constitué d'une pluralité de drones (11-17), les drones étant des drones volants, les drones formant entre eux un réseau de communication, **caractérisé en ce que** l'essaim met en oeuvre, en autonomie, une fonctionnalité d'évitement d'obstacles (20) fondée sur une observation collaborative de l'environnement de l'essaim par chacun des drones et le partage des informations de détection d'obstacle entre les drones.

2. Essaim (1) selon la revendication 1, dans lequel chaque drone (11) embarque :
- un système de capteurs (30) permettant l'observation de l'environnement de l'essaim à l'intérieur d'une enveloppe d'observation partielle et la génération d'informations de détection d'obstacle en cas de présence d'un obstacle à l'intérieur de ladite enveloppe d'observation partielle ;
- un moyen de radiocommunication (40) pour l'établissement d'au moins un lien de communication avec un autres drone de l'essaim pour l'échange des informations de détection d'obstacle ; et
- une unité de calcul (50) propre à calculer une trajectoire individuelle dudit drone à partir des informations de détection d'obstacle générées par ledit drone ou reçues d'un autre drone de l'essaim.

3. Essaim (1) selon la revendication 2, dans lequel l'unité de calcul (50) de chaque drone (11) est propre à déterminer une position relative et/ou une vitesse relative d'au moins un drone proche dudit drone, l'unité de calcul dudit drone calculant la trajectoire individuelle dudit drone en tenant compte, en outre, de ladite position relative et/ou de ladite vitesse relative.

4. Essaim (1) selon la revendication 2 ou la revendication 3, dans lequel l'unité de calcul (50) de chaque drone (11) calcule la trajectoire individuelle dudit drone de manière à ce que l'essaim adopte une configuration optimisée.

5. Essaim (1) selon la revendication 4, dans lequel la configuration est optimisée en maximisant une zone de l'environnement observée par l'essaim, la zone observée correspondant à la réunion des enveloppes d'observation partielles (41 - 47) de chaque drone (11 - 17) de l'essaim.

6. Essaim (1) selon la revendication 5, dans lequel, l'essaim se déplaçant selon une direction principale (V), les drones (11 - 17) sont orientés pour que la zone observée se situe préférentiellement en avant de l'essaim de drones.

7. Essaim (1) selon l'une quelconque des revendications 4 à 6, dans lequel la configuration est optimisée de sorte qu'une topologie du réseau de communication que forment entre eux les drones (11 - 17) de l'essaim soit connexe, de préférence bi-connexe.

8. Essaim (101) selon l'une quelconque des revendications 4 à 7, dans lequel l'essaim est propre à s'écarter de sa configuration optimisée par déformation pour éviter un obstacle (20), puis à reprendre la configuration optimisée initiale après avoir dépassé l'obstacle.

9. Essaim (101) selon la revendication 7 ou la revendication 8, dans lequel la configuration est optimisée de sorte qu'une distance entre deux drones proches soit contrainte autour d'une distance de référence (D0).

10. Essaim (1) selon l'une quelconque des revendications précédentes, dans lequel les drones (11 - 17) sont identiques entre eux, les systèmes de capteurs embarqués (30) par chacun des drones étant identiques.

11. Essaim selon l'une quelconque des revendications précédentes, dans lequel les drones sont différents, les systèmes de capteurs embarqués par chacun des drones étant identiques ou différents, l'essaim étant hétérogène.

12. Essaim (1) selon l'une quelconque des revendications précédentes, dans lequel chaque drone (11 - 17) est un drone léger, présentant une envergure totale inférieure à un mètre.

13. Essaim (1) selon l'une quelconque des revendications 2 à 12, dans lequel l'unité de calcul (50) d'un drone (11) mémorise une matrice (80) maillant l'environnement de l'essaim, la matrice étant subdivisée en cellules, chaque cellule dans laquelle un obstacle a été détecté étant associée à un drapeau, une mise à jour de la matrice étant réalisée à partir des informations de détection d'obstacle générées par ledit drone ou reçues d'un autre drone de l'essaim.

14. Essaim (1) selon la revendication 13, dans lequel les dimensions des cellules de la matrice (80) dépendent des enveloppes d'observation partielles (41 - 47) des systèmes de capteurs (30) des drones de l'essaim.

15. Procédé de détection et d'évitement d'un obstacle mis en oeuvre dans un essaim conforme à l'une quelconque des revendications 1 à 14, **caractérisé en ce qu'**il comporte les étapes consistant à :
- adoption par l'essaim d'une configuration optimisée ;
- observation d'une zone de l'environnement correspondant à la réunion des enveloppes d'observation partielles de chaque drone de l'essaim ;
- partage des informations de détection d'obstacle générées par un drone avec les autres drones de l'essaim en utilisant le réseau de communication établis entre les drones de l'essaim ; et,
- calcul par chaque drone de sa trajectoire individuelle en tenant compte des informations de détection d'obstacle qu'il a générées et/ou qu'il a reçues d'autres drones.
